# EUROPÄISCHE PATENTSCHRIFT

(11) **EP 2 178 711 B1**
(45) Veröffentlichungstag und Bekanntmachung des Hinweises auf die Patenterteilung: **07.03.2012**
(21) Anmeldenummer: 08785322.2
(22) Anmeldetag: 02.08.2008
(51) Int. Cl.: B60J 5/10, B60J 10/08

(54) **KRAFTFAHRZEUG**
MOTOR VEHICLE
VEHICULE A MOTEUR

(30) Priorität: 23.08.2007 DE 102007039808
(43) Veröffentlichungstag der Anmeldung: 28.04.2010
(73) Patentinhaber: Bayerische Motoren Werke Aktiengesellschaft, 80809 München (DE)
(72) Erfinder: ALDERSLEY, Nicholas, 85241 Hebertshausen (DE); RODEWALD, Michael, Greenville, 296150000 South carolina (US); DOCKWEILER, Achim, 81829 München (DE)
(74) Vertreter: Günther, Hans Peter
(86) Internationale Anmeldenummer: PCT/EP2008/006391
(87) Internationale Veröffentlichungsnummer: WO 2009/024256

(56) Entgegenhaltungen:
- EP-A- 1 120 303
- EP-A- 1 457 373
- EP-A- 1 574 374
- DE-A1- 10 143 643
- DE-A1- 19 635 873

## Beschreibung

Die Erfindung betrifft ein Kraftfahrzeug gemäß dem Oberbegriff des Anspruchs 1.

Es ist bereits ein Kraftfahrzeug bekannt, bei dem in einer Karosserie des Kraftfahrzeuges eine Heckklappenöffnung ausgebildet ist, in der eine nach oben verschwenkbare Heckklappe angeordnet ist. Ferner ist es bekannt, dass in der Heckklappe eine separat zu einem Heckklappenkörper verschwenkbare Heckfensterscheibe angeordnet ist.

Die bekannte Heckklappenöffnung weist einen umlaufenden Rand auf, an dem eine umlaufende Heckklappendichtung angeordnet ist. Auf der Heckklappendichtung liegt in der geschlossenen Position eine entsprechende an der Heckklappe ausgebildete Anlagefläche auf. Die Heckklappe weist eine Heckklappen-Fensteröffnung mit einem umlaufenden Rahmen auf. In dem Rahmen ist ebenfalls eine Dichtung angeordnet, an der ein umlaufender Rand des Heckfensters anliegt.

Zur Abdichtung sind somit bei der bekannten Heckklappe eine umlaufende Dichtung zwischen der Heckklappe und der Heckklappenöffnung und eine umlaufende Dichtung zwischen der Heckfensterscheibe und der Heckklappe erforderlich.

Aus der DE 196 35 873 A1 ist eine schwenk- oder schiebbare Heckklappe eines Kraftfahrzeuges bekannt, bei der durch die Verwendung von Materialien mit einem geringen Gewicht und durch eine entsprechende Gestaltung der Innen- und der Außenhaut der Heckklappe das Gewicht reduziert wird. Die bekannte Heckklappe hat einen geschlossenen Tragrahmen, der die auftretenden Belastungen aufnimmt. An dem Tragrahmen sind die Innen- und die Außenhaut angeordnet. Der Tragrahmen weist Holme auf, die zum einen im Bereich einer Heckscheibe U-förmig verlaufen. Die U-Form ergibt sich aus einem oberen, quer verlaufenden Holm und sich daran anschließende, seitlich Holme. An die beiden seitlichen Holme schließen sich Holme an, die von einem unteren Rand der Heckscheibe bis zu einer Schlossaufnahme in einem stumpfen Winkel verlaufen, so dass sich eine V-Form ergibt. Der bekannte, geschlossene Tragrahmen ist somit in Form eines Fünfeckes ausgebildet.

EP 1120303 offenbart ein Kraftfahrzeug gemäß dem Oberbegriff des Anspruchs 1.

Aufgabe der Erfindung ist es, ein Kraftfahrzeug zu schaffen, bei dem der Aufbau einer Heckklappe vereinfacht ist.

Diese Aufgabe wird durch die Merkmale des Anspruchs 1 gelöst.

Bei einem erfindungsgemäßen Kraftfahrzeug ist in einer Heckklappenöffnung, die in einer Karosserie ausgebildet ist, eine Heckklappe verschwenkbar an einem Dachabschnitt der Karosserie angeordnet. Die Heckklappe weist einen Heckklappenkörper und eine daran angeordnete Heckfensterscheibe auf. Mindestens eine Dichtung ist an der Heckklappenöffnung zur Abdichtung der Heckklappe befestigt. An dem Heckklappenkörper sind einstückig zueinander beabstandete Schwenkarme angeordnet. An einem oberen Ende des jeweiligen Schwenkarmes ist jeweils ein Scharnierarm vorgesehen, der jeweils in einem Dachabschnitt der Karosserie gelagert ist.

Dadurch erfolgt vorteilhafterweise eine Abdichtung ohne die jeweiligen Schwenkarme zwischen dem oberen Heckklappenabschnitt, dem Heckklappenkörper und der Heckklappenöffnung über eine einzige an der Heckklappenöffnung angeordnete, umlaufende Dichtung.

Eine weitere, in etwa geradlinig verlaufende Dichtung ist zwischen einem unteren Randabschnitt der Heckfensterscheibe und einem oberen Randabschnitt des Heckklappenkörpers vorgesehen.

Durch die erfindungsgemäße Bauweise ist es vorteilhafterweise möglich, dass unterhalb eines oberen Abschnittes der Heckfensterscheibe Bauteile, wie beispielsweise ein Antennenverstärker und/oder ein Bremslicht im trockenen Fahrzeuginnenraum befestigt werden können.

Ferner ist es vorteilhafterweise möglich, dass in einem Hohlraum des Dachabschnittes angeordnete Scharnierantriebe zur Verschwenkung der Heckfensterscheibe und des Heckklappenkörpers im trockenen Fahrzeuginnenraum sind. Dadurch benötigen diese Bauteile keine wasserdichte Abdichtung wie beim Stand der Technik.

Eine jeweils zur Heckklappenöffnung weisende Innenfläche der umlaufenden Dichtung begrenzen eine Beladungsbreite B der Heckklappenöffnung. Durch die erfindungsgemäße Bauweise ist es vorteilhafterweise möglich, die Beladungsbreite B zumindest im Bereich der Heckfensterscheibe zu vergrößern.

In einer vorteilhaften Ausführungsform sind einstückig an dem Heckklappenkörper zueinander beabstandete Schwenkarme angeordnet. An einem oberen Ende des jeweiligen Schwenkarmes ist jeweils ein Scharnierarm vorgesehen, der jeweils in einem Dachabschnitt der Karosserie gelagert ist.

Die Heckfensterscheibe ist in einer vorteilhaften Ausführungsform über voneinander beabstandete Scharnierarme verschwenkbar in einem Dachabschnitt der Karosserie gelagert.

In der Heckklappenöffnung ist vorteilhafterweise eine umlaufende Dichtung vorgesehen.

In einer vorteilhaften Ausführungsform liegen an der umlaufenden Dichtung der obere Randabschnitt der Heckfensterscheibe und seitliche Randabschnitte der Heckfensterscheibe im geschlossenen Zustand der Heckklappe an.

An einem unteren Bereich der umlaufenden Dichtung liegen vorteilhafterweise seitliche Randabschnitte und ein unterer, in Fahrzeugquerrichtung y, in etwa horizontal verlaufender Randabschnitt des Heckklappenkörpers an. Vorteilhafterweise ist an einem oberen Randabschnitt des Heckklappenkörpers eine in Fahrzeugquerrichtung y, in etwa horizontal verlaufende Dichtung angeordnet, die zur Abdichtung eines unteren Randabschnittes der Heckfensterscheibe dient.

Eine Ausführungsform der Erfindung wird nachstehend anhand der Zeichnungen beispielshalber beschrieben. Dabei zeigen:
- Fig. 1: eine perspektivische Ansicht auf einen Heckbereich eines Kraftfahrzeuges,
- Fig. 2a: eine Schnittansicht längs der Linie II-II in der Fig. 1, die die Anordnung eines oberen Endabschnittes einer bekannten Heckklappe an einem Dachabschnitt einer Heckklappenöffnung zeigt,
- Fig. 2b: eine Schnittansicht längs der Linie II-II in der Fig. 1, die die Anordnung eines oberen Endabschnittes einer erfindungsgemäßen Heckklappe an einem Dachabschnitt der Heckklappenöffnung zeigt,
- Fig. 3a: eine Schnittansicht längs der Linie III-III in der Fig. 1, die bei einer geschlossenen, bekannten Heckklappe die Anordnung eines seitlichen Randbereiches eines Heckfensters an der Heckklappenöffnung zeigt,
- Fig. 3b: eine Schnittansicht längs der Linie III-III in der Fig. 1, die bei einer geschlossenen, erfindungsgemäßen Heckklappe die Anordnung eines seitlichen Randbereiches eines Heckfensters an der Heckklappenöffnung zeigt,
- Fig. 4: eine perspektivische Ansicht auf einen Heckbereich des in der Fig. 1 gezeigten Kraftfahrzeuges, bei der sich ein unterer, erfindungsgemäßer Heckklappenabschnitt in einer geschlossenen Stellung befindet und das Heckfenster sich in einem geöffneten Zustand befindet,
- Fig. 5: eine perspektivische Ansicht des in der Fig. 4 gezeigten Kraftfahrzeuges, bei dem sich die erfindungsgemäße Heckklappe bei einem geschlossenen Heckfenster in einer geöffneten Stellung befindet,
- Fig. 6: eine perspektivische Ansicht der in der Fig. 4 gezeigten erfindungsgemäßen Heckfensterscheibe als Einzelbauteil,
- Fig.7: eine perspektivische Ansicht eines unteren erfindungsgemäßen Heckklappenabschnittes in der in der Fig. 5 gezeigten, geöffneten Stellung,
- Fig. 8: eine perspektivische Ansicht einer Heckklappe, die einen offenen Tragrahmen aufweist, wobei die Heckscheibe fest an der Heckklappe angeordnet ist,
- Fig. 9: eine Schnittansicht, die in Höhe der Linie IX-IX in der Fig. 8 verläuft, in der zusätzlich eine, in der Fig. 8 nicht dargestellte Karosseriesäule eines Kraftfahrzeuges dargestellt ist,
- Fig. 10: eine perspektivische Ansicht einer ersten Ausführungsform des in der Fig. 9 dargestellten, offenen Tragrahmens,
- Fig. 11: eine perspektivische Ansicht einer zweiten Ausführungsform des in der Fig. 8 gezeigten, offenen Tragrahmens, bei dem zusätzlich ein Querträgerabschnitt in Höhe eines unteren Randes der Heckscheibe vorgesehen ist,
- Fig. 12: eine perspektivische Ansicht einer Heckklappe entsprechend der Fig. 8, wobei die Heckscheibe verschwenkbar an einer nicht dargestellten Karosserie über zwei zueinander beabstandete Scharniere angeordnet ist.
- Fig. 13: eine Schnittansicht, die in Höhe der Linie XIII-XIII in der Fig. 12 durch eine in der Fig. 12 nicht abgebildete Karosseriesäule, einen verschwenkbaren Heckklappenabschnitt und durch eine seitlichen Tragrahmenabschnitt verläuft,
- Fig. 14: eine perspektivische Darstellung, die einen Heckklappenkörper zeigt, bei dem der in der Fig. 11 gezeigte, offene Tragrahmen mit dem zusätzlichen Querrahmen angeordnet ist und
- Fig. 15: eine perspektivische Darstellung des in der Fig. 12 gezeigten, verschwenkbaren Heckklappenabschnittes, in dem die Heckscheibe angeordnet ist.

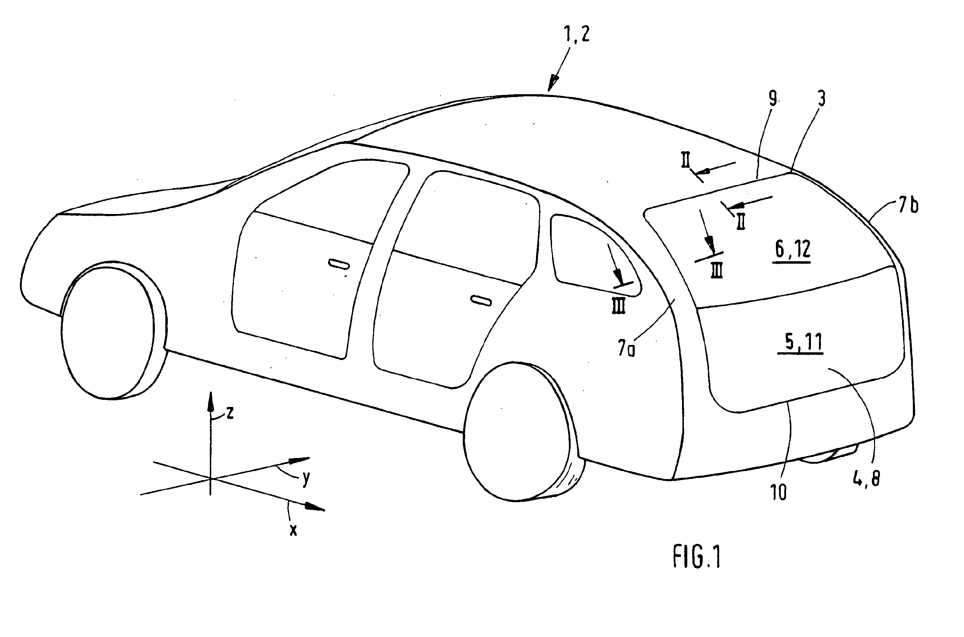

Die Fig. 1 zeigt ein Kraftfahrzeug 1, das eine Karosserie 2 aufweist, die mit einer Heckklappenöffnung 3 versehen ist, in der eine Heckklappe 4 angeordnet ist. Die Heckklappe 4 weist einen Heckklappenkörper 5 und eine Heckfensterscheibe 6 auf. Die Heckklappenöffnung 3 ist von zwei gegenüberliegenden Karosseriesäulen 7 einem Dachabschnitt 9 sowie einem Kofferraumbodenabschnitt 10 umrandet. Die Fig. 1 zeigt die Heckklappe 4 in einer geschlossenen Position 8, in der sich der Heckklappenkörper 5 und das Heckfenster 6 jeweils in der geschlossenen Position 11, 12 befinden.

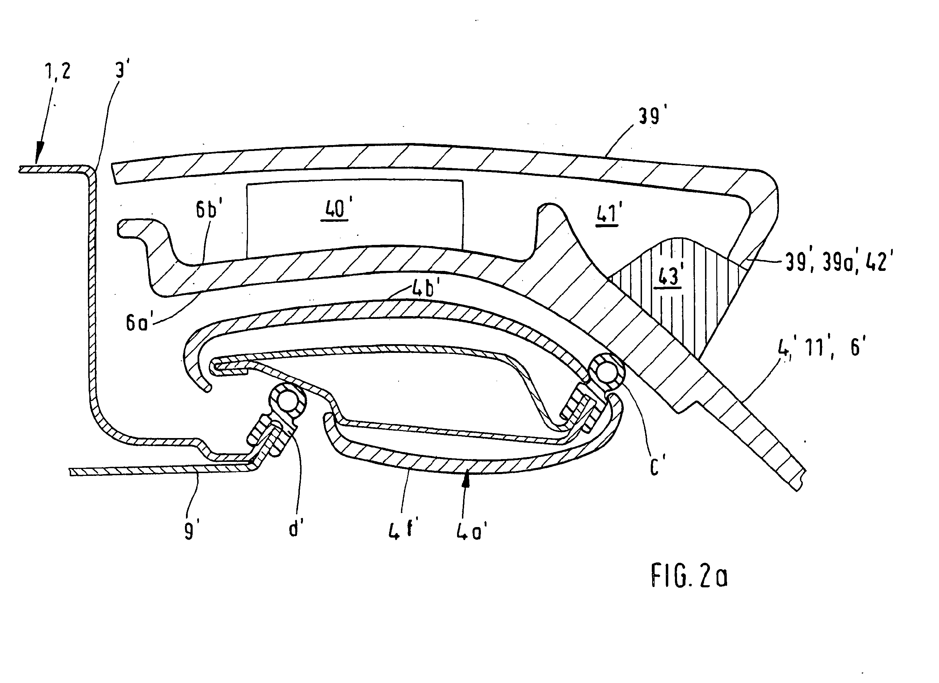

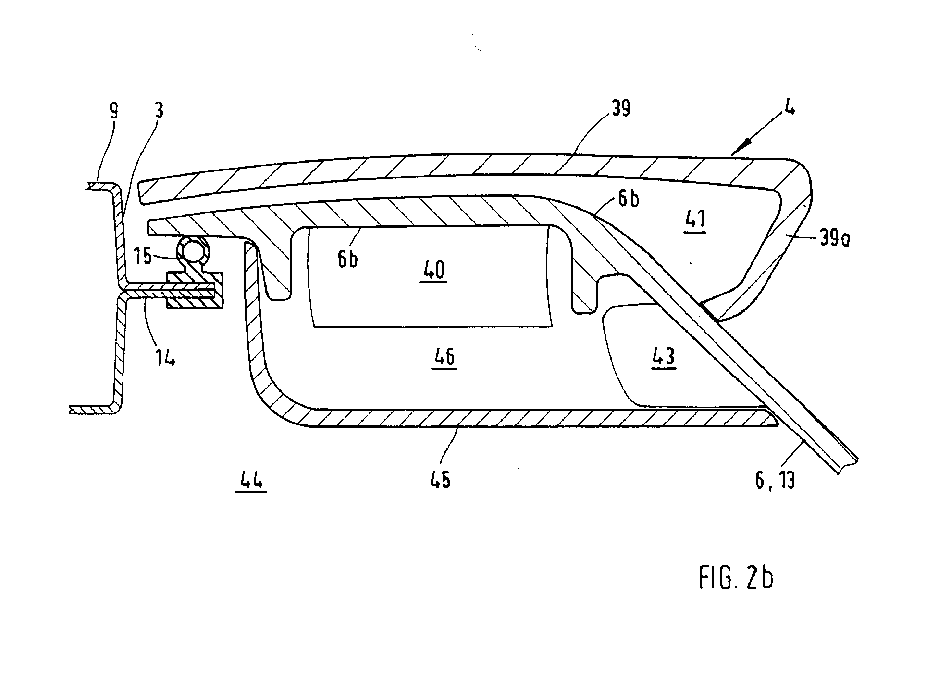

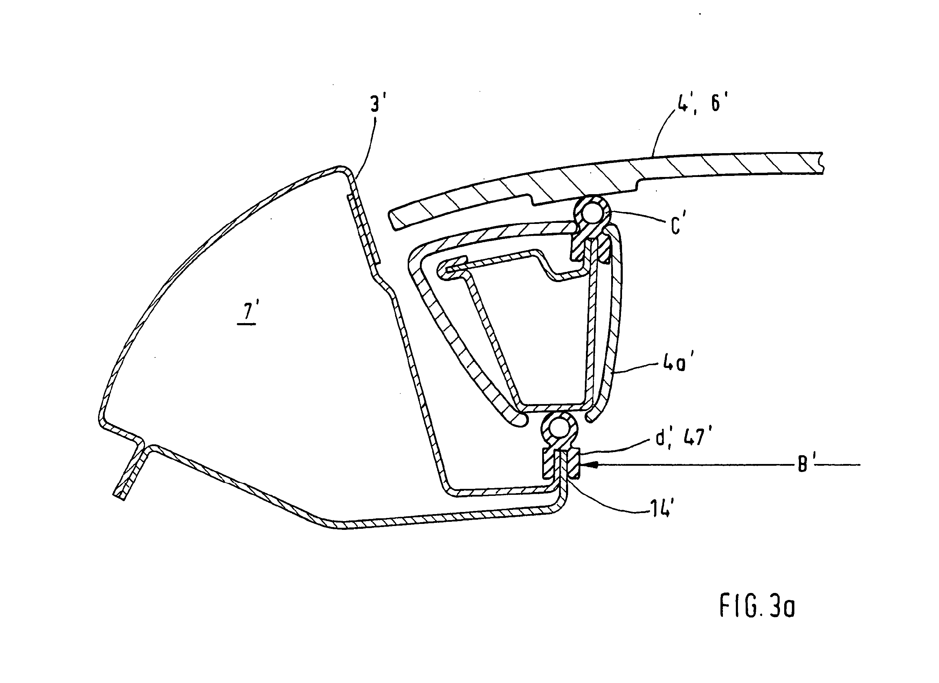

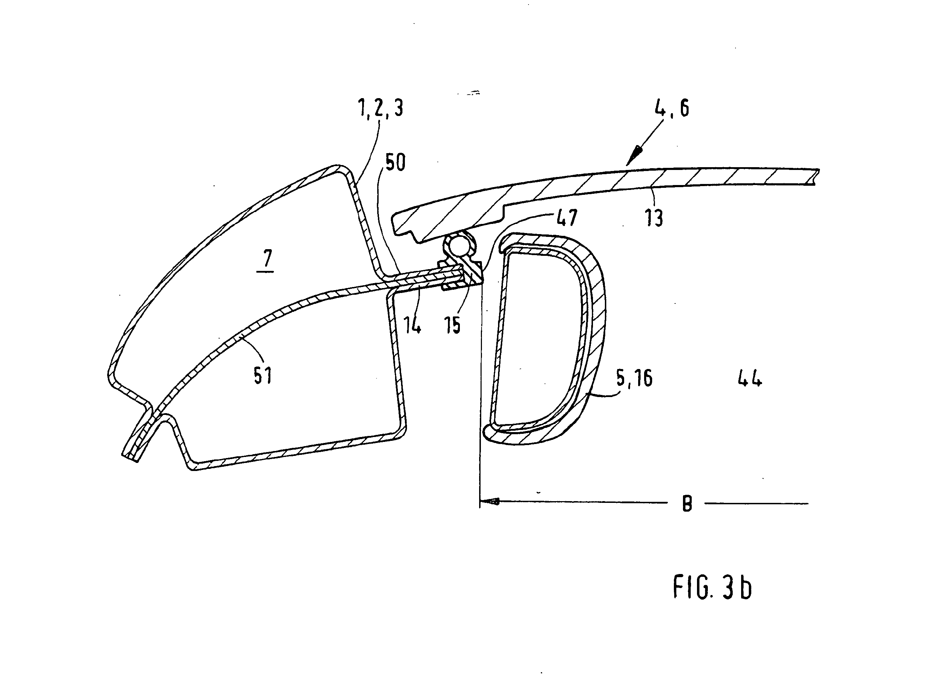

Die Figuren 2a und 3a zeigen Schnittansichten einer bekannten Heckklappenanordnung und die Figuren 2b und 3b zeigen Schnittansichten einer erfindungsgemäßen Heckklappenanordnung. Aus dem Vergleich der Figuren 2a und 3a mit den Figuren 2b und 3b ergibt sich der unterschiedliche Aufbau und die unterschiedliche Dichtung der bekannten Heckklappenanordnung und der erfindungsgemäßen Heckklappenanordnung in der Heckklappenöffnung.

Die Fig. 2a zeigt eine bekannte Heckklappe 4', die sich in einer geschlossenen Position 11' in einer Heckklappenöffnung 3' befindet. Die bekannte Heckklappe 4' weist einen oberen, U-förmigen Rahmenabschnitt 4a' auf, der an einem Heckklappenkörper angeordnet ist. Zwischen einer Oberseite 4b' des Rahmenabschnittes 4a' und einer Unterseite 6a' der Heckfensterscheibe 6' ist eine Dichtung c' angeordnet. Ferner ist eine weitere Dichtung d' zwischen einer Unterseite 4f des U-förmigen Rahmenabschnittes 4a' und einem Dachabschnitt 9' der Karosserie 2' angeordnet.

In der gezeigten Ausführungsform ist oberhalb eines oberen Abschnittes 6b' der Heckfensterscheibe 6' ein Spoiler oder ein Verkleidungsbauteil oder dergleichen 39' angeordnet. In einem zwischen der Heckfensterscheibe 6' und dem Verkleidungsbauteil 39' gebildeten Hohlraum 41' ist ein elektronisches Bauteil, wie beispielsweise ein Antennenverstärker 40', an dem oberen Abschnitt 6b' wasserdicht befestigt. An einem von der Karosserie 2' abgewandten Randabschnitt 39a' des Verkleidungsbauteils 39' ist in einer Aussparung 42' des Randabschnittes 39a' ein Bremslicht 43' wasserdicht, d.h. in einer wasserdichten Ausführung, zwischen dem Randabschnitt 39a' und der Heckfensterscheibe 6' angeordnet.

Bei der in der Fig. 2b gezeigten erfindungsgemäßen Heckklappe 4 ist zwischen einer Unterseite 13 der Heckfensterscheibe 6 und einem Flansch 14 des Dachabschnittes 9 eine einzige Dichtung 15 in der Heckklappenöffnung 3 angeordnet.

Zwischen der Heckfensterscheibe 6 und einem zu einem Fahrzeuginnenraum 44 zeigenden Verkleidungsbauteil 45 ist ein Hohlraum 46 ausgebildet. In dem Hohlraum 46 ist an dem oberen Abschnitt 6b der Heckfensterscheibe 6 ein elektronisches Bauteil, wie beispielsweise ein Antennenverstärker 40, und ein Bremslicht 43 befestigt. Die beiden Bauteile 40, 43 benötigen keine wasserdichte Abdichtung, da sich die beiden Bauteile 40, 43 im trockenen Fahrzeuginnenraum 44 befinden.

Die Fig. 3a zeigt eine Schnittansicht der in der Fig. 2a dargestellten Heckklappe 4' im Bereich einer hinteren Karosseriesäule 7'. Zwischen der Heckfensterscheibe 6' und dem U-förmigen Rahmenabschnitt 4a', der an einem Heckklappenkörper einstückig ausgebildet ist, ist die Dichtung c' angeordnet. Ferner ist zwischen dem seitlichen, nach unten verlaufenden Abschnitt des U-förmigen Rahmenabschnittes 4a' und einem Flansch 14' der dazu gegenüberliegenden Karosseriesäule 7' die Dichtung d' vorgesehen.

Eine jeweils zur Heckklappenöffnung 3' weisende Innenfläche 47' der gegenüberliegenden Dichtungen d' begrenzen eine Beladungsbreite B' der Heckklappenöffnung 3'.

Im Unterschied dazu ist bei der in der Fig. 3b dargestellten erfindungsgemäßen Heckklappe 4 nur eine einzige Dichtung 15 zwischen der Unterseite 13 und dem Flansch 14 an der Karosseriesäule 7 vorgesehen. Unterhalb der Heckfensterscheibe 6 und beabstandet zu der Karosseriesäule 7 ist in der Fig. 3b ein Schwenkarm 16 dargestellt, der einstückig an dem Heckklappenkörper 5 ausgebildet ist.

Eine jeweils zur Heckklappenöffnung 3 weisende Innenfläche 47 der gegenüberliegenden Dichtungen 15 begrenzen eine Beladungsbreite B der Heckklappenöffnung 3.

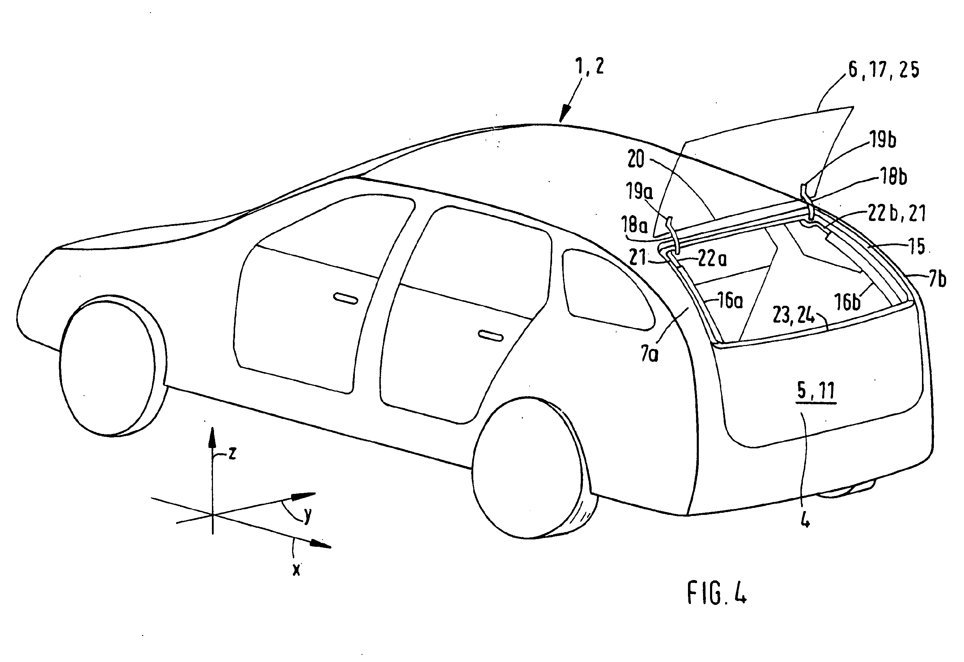

Die Fig. 4 zeigt eine geöffnete Position 17 der Heckfensterscheibe 6, während sich der Heckklappenkörper 5 in der geschlossenen Position 11 befindet. Die Heckfensterscheibe 6 ist über zwei voneinander beabstandete Scharnierarme 18a, 18b um eine in Fahrzeugquerrichtung y verlaufende, horizontale Achse schwenkbar.

Ein Ende 19a, 19b des jeweiligen Scharnierarmes 18a, 18b ist an einem oberen Randbereich 20 der Heckfensterscheibe 6 befestigt. Ein dazu gegenüberliegendes, jeweiliges, nicht dargestelltes Ende des jeweiligen Scharnierarmes 18a, 18b ist in einem nicht sichtbaren Hohlraum über einen Scharnierantrieb 30a und 30b im Dachabschnitt 9 der Karosserie 2 verschiebbar und verschwenkbar gelagert.

In der Fig. 4 sind ferner die beiden am Heckklappenkörper 5 angeordneten Schwenkarme 16a und 16b erkennbar. An einem oberen, freien Ende 21 der Schwenkarme 16 sind Scharnierarme 22a und 22b angeordnet. Die Scharnierarme 22a und 22b sind ebenfalls in dem nicht dargestellten Hohlraum im Dachabschnitt 9 über einen üblichen Scharnierantrieb 32a und 32b verschiebbar und schwenkbar gelagert.

Ferner ist in der Fig. 4 eine weitere Dichtung 23 dargestellt, die an einem oberen Randabschnitt 24 des Heckklappenkörpers 5 angeordnet ist. Die Dichtung 23 dient zur Abdichtung zwischen einem unteren Randabschnitt 25 der Heckfensterscheibe 6 und dem oberen Randabschnitt 24 des Heckklappenkörpers 5.

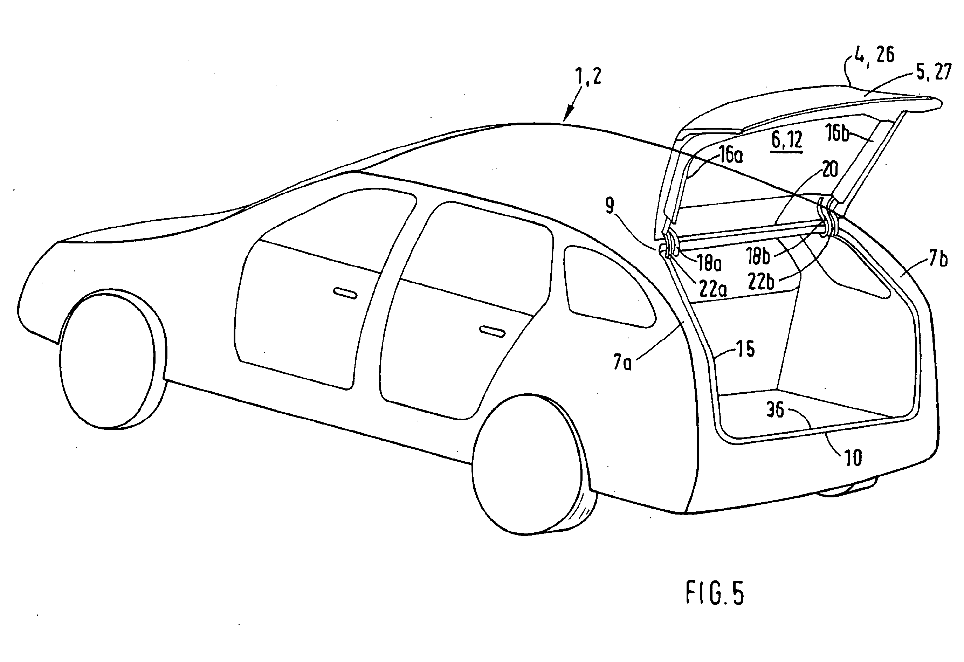

Die Fig. 5 zeigt eine Heckklappe 4 in einer geöffneten Position 26, in der sich der Heckklappenkörper 5 in der geöffneten Position 27 und das Heckfenster 6 in der geschlossenen Position 12 befindet. In der Fig. 5 ist die umlaufende Dichtung 15 erkennbar.

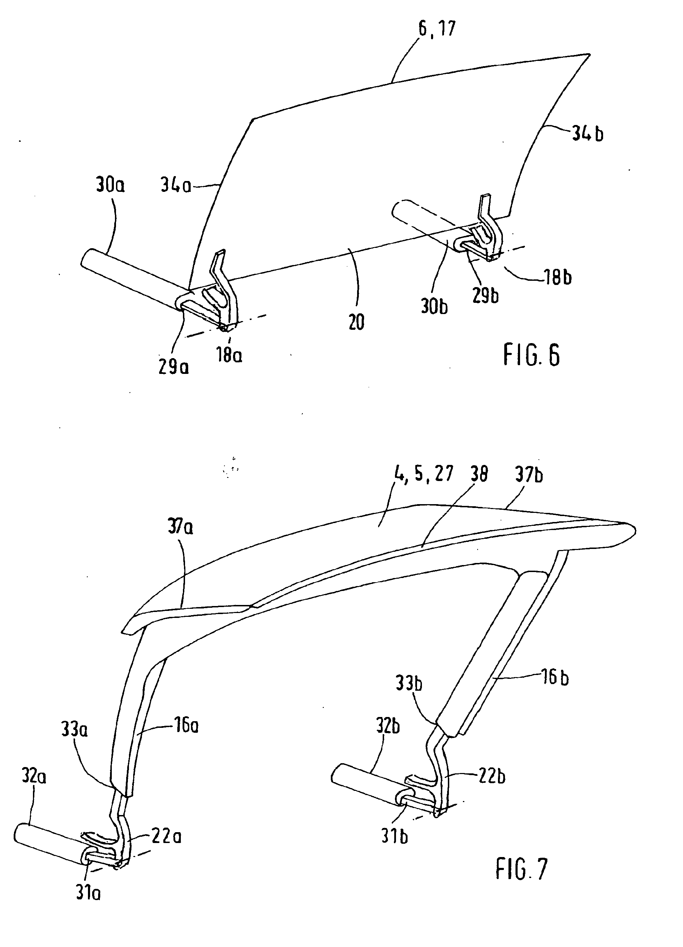

In der Fig. 6 ist die Heckfensterscheibe 6 als Einzelbauteil in der in der Fig. 4 gezeigten, geöffneten Position 17 abgebildet. An einem dem Dachabschnitt 9 zugewandten, jeweiligen Ende 29 ist jeweils ein Scharnierantrieb 30 dargestellt.

In der Fig. 7 ist der Heckklappenkörper 5 in einer geöffneten Position 27 gezeigt, die der Darstellung in der Fig. 5 entspricht. An einem dem Dachabschnitt 9 zugewandten Ende 31 des jeweiligen Scharnierarmes 22a, 22b ist jeweils ein Scharnierantrieb 32a, 32b dargestellt.

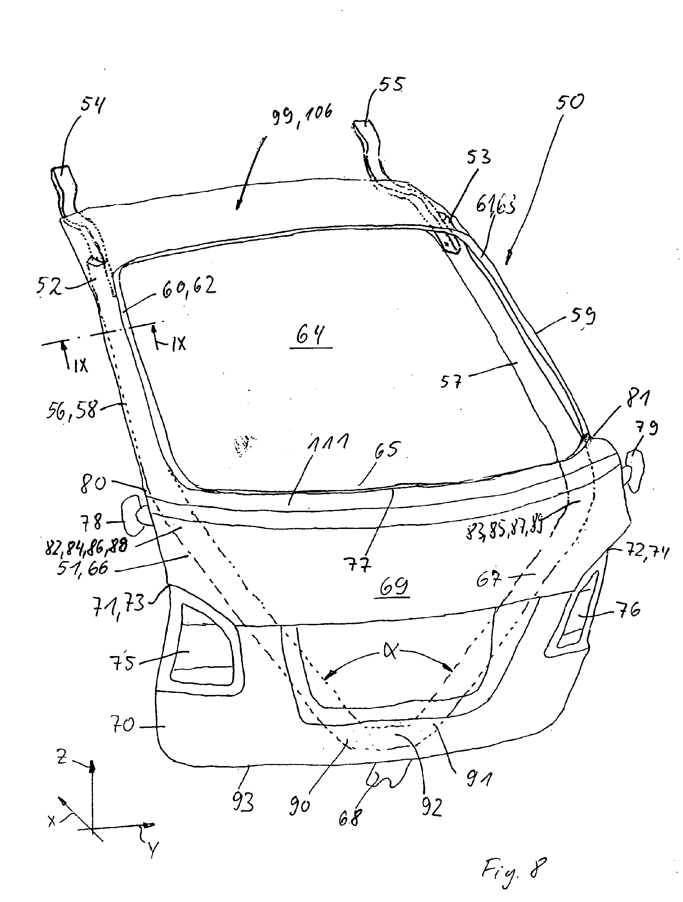

Die Fig. 8 zeigt eine Heckklappe 50 eines Kraftfahrzeuges 1, die einen offenen, U-förmigen Tragrahmen 51 aufweist. Der Tragrahmen 51 ist an einem unteren Heckklappenabschnitt oder Heckklappenkörper 69 der Heckklappe 50 befestigt. An den Heckklappenkörper 69 schließt sich ein oberer Heckklappenabschnitt 99 an.

An oberen, freien Enden 52, 53 des Tragrahmens 51 ist jeweils ein Scharnierarm 54, 55 befestigt. Der Tragrahmen 51 weist obere Tragrahmenabschnitte 56, 57 auf, die in der gezeigten Ausführungsform parallel zu Rahmenabschnitten 58, 59 des oberen Heckklappenabschnittes 99 verlaufen. Die Rahmenabschnitte 58, 59 des oberen Heckklappenabschnittes 99 sind über einen oberen Querrahmen 106 und einen unteren Querrahmen 111 miteinander verbunden.

An den seitlichen Rändern 60, 61 der Rahmenabschnitte 58, 59 schließen sich seitliche Ränder 62, 63 einer Heckfensterscheibe 64. Bei der Ausführungsform der Figur 8 ist die Heckfensterscheibe 64 an den oberen Tragrahmenabschnitten 56, 57 des Tragrahmens 51 befestigt.

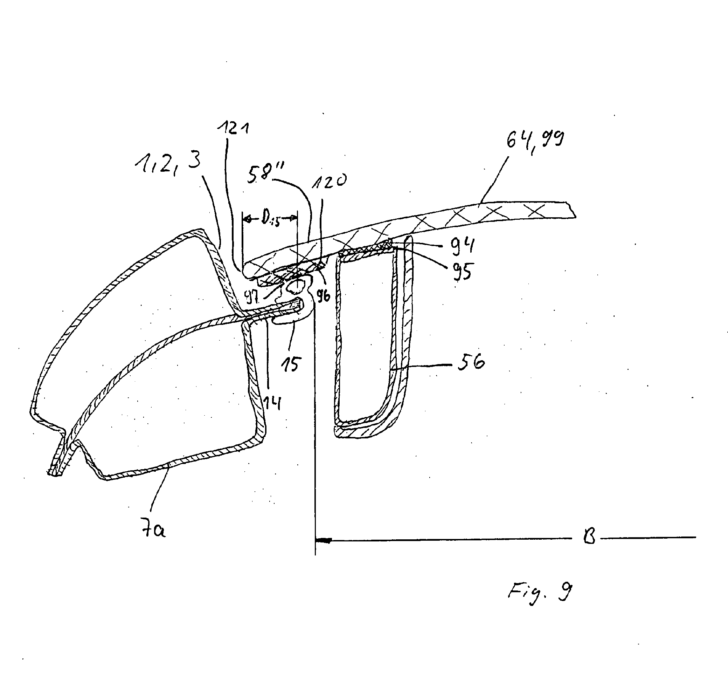

In einer anderen Ausführungsform weist der obere Heckklappenabschnitt 99, wie dies in der Figur 9 gezeigt ist, die Heckfensterscheibe 64 ohne einen Rahmen auf. Die Heckfensterscheibe 64 ist direkt an den oberen Tragrahmenabschnitten 56, 57 des Tragrahmens 51 befestigt.

In Höhe eines unteren, in Fahrzeugquerrichtung y verlaufenden Randes 65 der Heckfensterscheibe 64 schließen sich einstückig an die oberen Tragrahmenabschnitte 56, 57 untere Tragrahmenabschnitte 66, 67 an, die V-förmig bis in Höhe einer Schlossaufnahme 68 unter einem Winkel α zusammenlaufen.

An den unteren Rand 65 der Heckfensterscheibe 64 schließt sich der Heckklappenkörper 69 an. In einer Außenhaut 70 des Heckklappenkörpers 69 sind an gegenüberliegenden Seitenrändern 71, 72 Aussparungen 73, 74 vorgesehen, die zur Aufnahme von Blinkeinrichtungen 75, 76 oder dergleichen dienen.

In Höhe eines oberen Randes 77 des Heckklappenkörpers 69 stehen seitlich über die Seitenränder 71, 72 des Heckklappenkörpers 69 jeweils eine Verkeilungseinrichtung 78, 79 über.

In einer Ausführungsform ist die jeweilige Verkeilungseinrichtung 78, 79 an einem unteren Ende 80, 81 des jeweiligen Rahmenabschnittes 58, 59 in Höhe des unteren Randes 65 der Heckfensterscheibe 64 an dem Heckklappenkörper 69 ausgebildet.

In einer anderen Ausführungsform sind die Verkeilungseinrichtungen 78, 79 direkt an einem entsprechenden Bereich 82, 83 an dem jeweiligen unteren Ende 84, 85 der oberen Tragrahmenabschnitte 56, 57 am jeweiligen Übergang 86, 87 in die oberen Enden 88, 89 der unteren Tragrahmenabschnitte 66, 67 ausgebildet.

Die Verkeilungseinrichtungen 78, 79 greifen jeweils in passende Vertiefungen und / oder Aussparungen ein, die in der jeweiligen Karosseriesäule 7 der Heckklappenöffnung 3 ausgebildet sind, wenn die Heckklappe 50 sich in der geschlossenen Position 11 befindet.

An unteren Enden 90, 91 der unteren Tragrahmenabschnitte 66, 67 erfolgt eine Verbindung der unteren Tragrahmenabschnitte 66, 67 in einem Verbindungsbereich 92. Der Verbindungsbereich 92 befindet sich oberhalb eines unteren Randes 93 des Heckklappenkörpers 69. Im Anschluss an den Verbindungsbereich 92 der unteren Tragrahmenabschnitte 66, 67 ist an dem unteren Rand 93 des Heckklappenkörpers 69 die Schlossaufnahme 68 befestigt.

Im geschlossenen Zustand 11 der Heckklappe 50 in der Heckklappenöffnung 3 ergibt sich über die Verbindung der Verkeilungseinrichtungen 78, 79 mit der jeweiligen Karosseriesäule 7 der Karosserie 2 und der Verbindung der Schlossaufnahme 68 mit dem im Kofferraumbodenabschnitt 10 ausgebildeten Schloss eine Aussteifung der Heckklappenöffnung 3.

Die Fig. 9 zeigt eine Schnittansicht ähnlich der Fig. 3b mit dem Unterschied, dass die Heckfensterscheibe 64 über einen Klebstoff 94 an einer Oberseite 95 des jeweiligen oberen Tragrahmenabschnittes 56, 57 geklebt ist. Der Klebstoff 94 ist beispielsweise ein Scheibenkleber. An einer Unterseite 96 des jeweiligen seitlichen Randabschnittes 58", 59" der Heckscheibe 64 ist eine PU-Umspritzung 120 vorgesehen. Die PU-Umspritzung 120 liegt an einer Dichtfläche 97 der umlaufenden Dichtung 15 an.

Durch die Anordnung der Dichtung 15 an der Unterseite 96 des jeweiligen Randabschnittes 58", 59" der Heckscheibe 64 kann die Dichtung 15 näher zur Heckklappenöffnung 3 der jeweiligen Karosseriesäule 7 verlagert werden. Die Dichtung 15 kann auch bei einer Konstruktion näher zur Heckklappenöffnung 3 der jeweiligen Karosseriesäule 7 verlagert werden, bei der die Heckfensterscheibe 64 von Rahmenabschnitten 58, 59, 106 und 111 umrandet ist.

Durch die Verlagerung der Dichtung 15 näher zur Heckklappenöffnung 3 der jeweiligen Karosseriesäule 7 wird die Beladungsbreite B größer, als dies bei dem aus dem in der Fig. 3a gezeigten Stand der Technik möglich ist. Die Vergrößerung der Beladungsbreite B der Heckklappenöffnung 3 liegt in einer Ausführungsform bei **B=4 bis 8** cm.

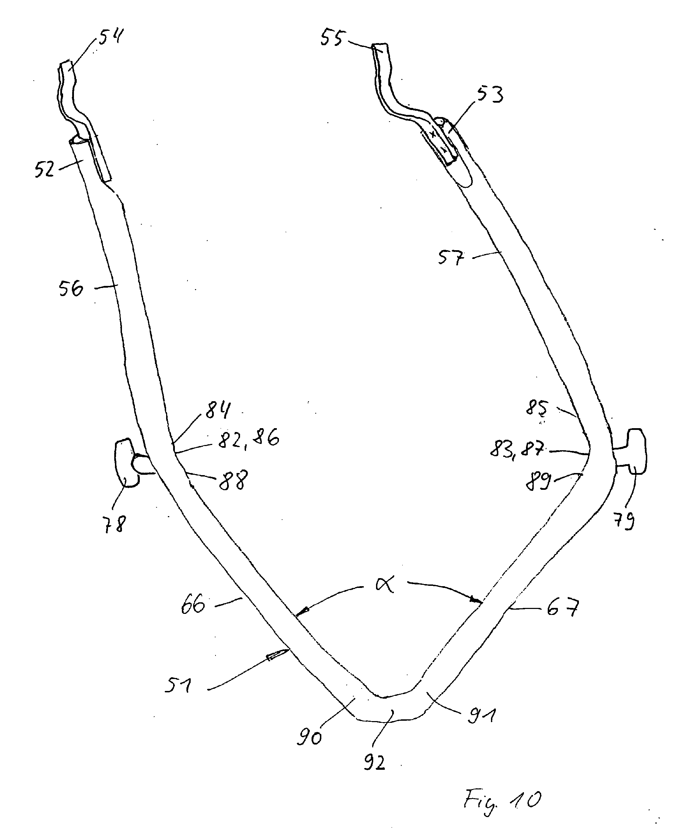

Die Fig. 10 zeigt eine erste Ausführungsform des Tragrahmens 51 mit den daran angeordneten Scharnierarmen 54 und 55 als ein Einzelbauteil. Zusätzlich sind an dem Tragrahmen 51 die Verkeilungseinrichtungen 78 und 79 im Übergang 86 und 87 zwischen dem jeweiligen oberen Tragrahmenabschnitt 56, 57 und dem unteren Tragrahmenabschnitt 66, 67 dargestellt.

Der Winkel α zwischen den unteren Tragrahmenabschnitten 66, 67 liegt bei α = 70 bis 110°. Ferner weist der Tragrahmen 51 in einer Ausführungsform in der Seitenansicht eine Abwinklung zwischen dem oberen Heckklappenabschnitt 99 und dem Heckklappenkörper 69 auf. Die Abwinklung verläuft im Bereich des unteren (Quer-)Randes 65 der Heckfensterscheibe 64 oder dem unteren Querrahmen 111 und dem oberen (Quer-)Rand 77 des Heckklappenkörpers 69 entsprechend dem Verlauf der Heckklappe 50.

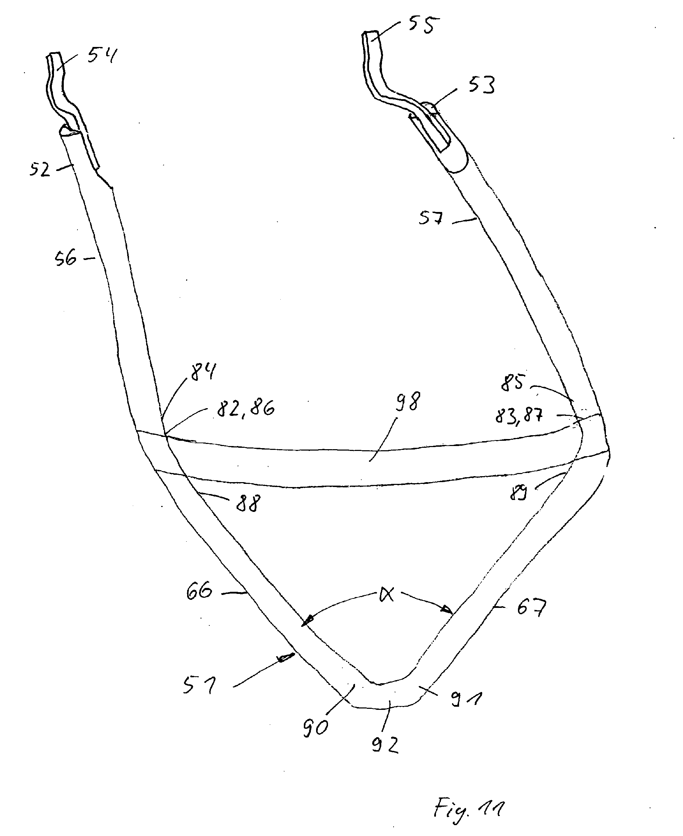

Die Fig. 11 zeigt eine perspektivische Ansicht einer zweiten Ausführungsform eines Tragrahmens 51, der sich von dem in der Fig. 10 gezeigten Tragrahmen 51 dadurch unterscheidet, dass eine zusätzliche Querversteifung über einen Quertragrahmen 98 vorgesehen ist. Der Quertragrahmen 98 ist in der gezeigten Ausführungsform an den Übergängen 86 und 87 befestigt.

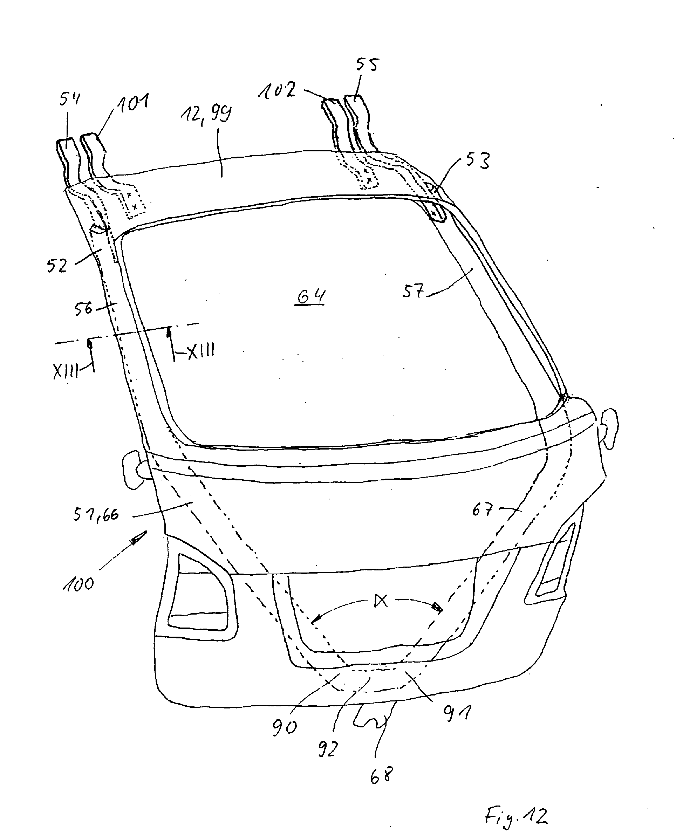

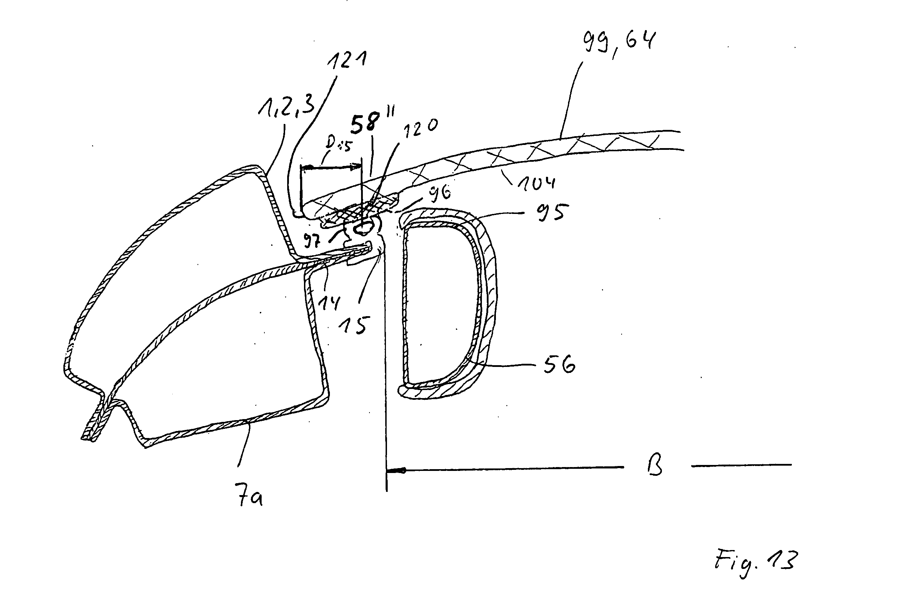

Die Fig. 12 und 13 unterscheiden sich von den Fig. 8 und 9 dadurch, dass ein verschwenkbarer, oberer Heckklappenabschnitt 99 an einer Heckklappe 100 vorgesehen ist. Der obere Heckklappenabschnitt 99 ist über Scharnierarme 101, 102 verschwenkbar am Dachabschnitt 9 zwischen der geschlossenen Position 12 und der geöffneten Position 17 gelagert.

In der Fig. 12 ist die Heckklappe 100 gezeigt, in der sich der obere Heckklappenabschnitt 99 mit der daran angeordneten Heckfensterscheibe 64 in der geschlossenen Position 12 befindet.

Die Fig. 13 zeigt eine Schnittansicht ähnlich der Fig. 3b. Eine Innenfläche 104 der Heckfensterscheibe 64 des oberen Heckklappenabschnittes 99 verläuft beabstandet zu eine Oberseite 95 des oberen Tragrahmenabschnittes 56. Die Unterseite 96 des seitlichen Randabschnittes 58" der Heckfensterscheibe 64 liegt an der Dichtfläche 97 der umlaufenden Dichtung 15 an.

In einer anderen Ausführungsform des oberen Heckklappenabschnittes 99 ist die Heckfensterscheibe 64 von Rahmenabschnitten 58, 59, 106 und 111 umrandet. Entsprechend liegen in der geschlossenen Position 12 des oberen Heckklappenabschnittes 99 die seitlichen und oberen Rahmenabschnitte 58, 59 und 106 auf der Dichtung 15 an.

Durch die Anordnung der Dichtung 15 gegenüber der Unterseite 96 des jeweiligen Rahmenabschnittes 58, 59, 106 oder des jeweiligen Randabschnittes 58", 59", 106" kann die Dichtung 15 näher zur Heckklappenöffnung 3 der jeweiligen Karosseriesäule 7 verlagert werden.

Dadurch wird ein Abstand D₁₅ zwischen der Dichtung 15 und einer Stirnseite 121 des jeweiligen Rahmenabschnittes 58, 59 des oberen Heckklappenabschnittes 99 oder des Randabschnittes 58", 59" der Heckfensterscheibe 64 kleiner, als dies beim Stand der Technik ist.

Durch diese Bauweise wird die Beladungsbreite B größer, als dies bei dem aus dem in der Fig. 3a gezeigten Stand der Technik möglich ist. Die Vergrößerung der Beladungsbreite B der Heckklappenöffnung 3 liegt in einer Ausführungsform bei **B=4 bis 8 cm.**

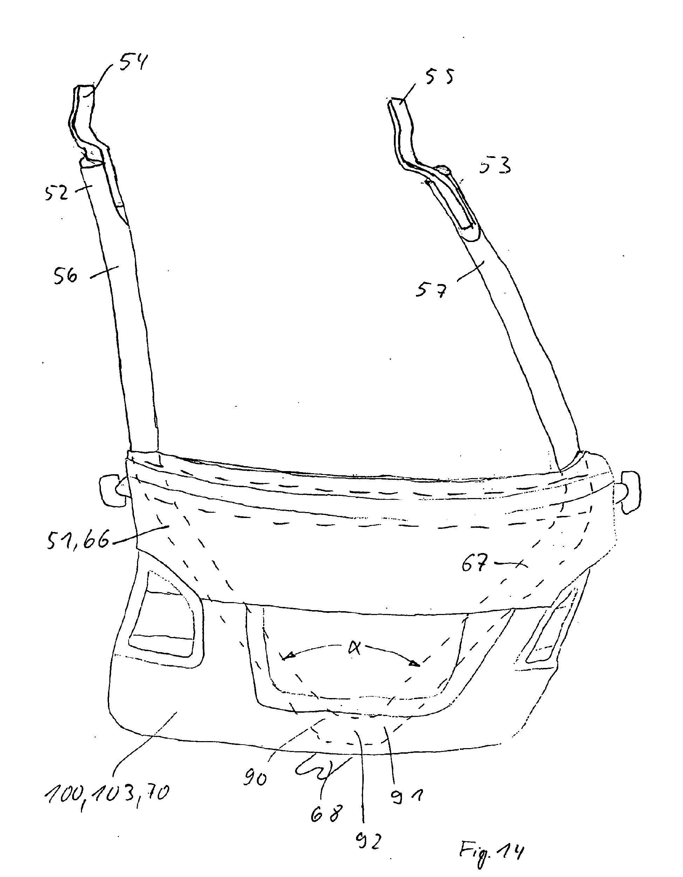

In der Fig. 14 ist ein unterer Heckklappenabschnitt oder Heckklappenkörper 103 der Heckklappe 100 dargestellt. An den oberen, freien Enden 52, 53 des Tragrahmens 51 ist jeweils der Scharnierarm 54, 55 befestigt. Der Tragrahmen 51 weist obere Tragrahmenabschnitte 56, 57 auf, die in der gezeigten Ausführungsform parallel zu Rahmenabschnitten 58, 59 des oberen Heckklappenabschnittes 99 verlaufen. An den seitlichen Rändern 60, 61 der Rahmenabschnitte 58, 59 sind seitliche Ränder 62, 63 der Heckfensterscheibe 64 angeordnet.

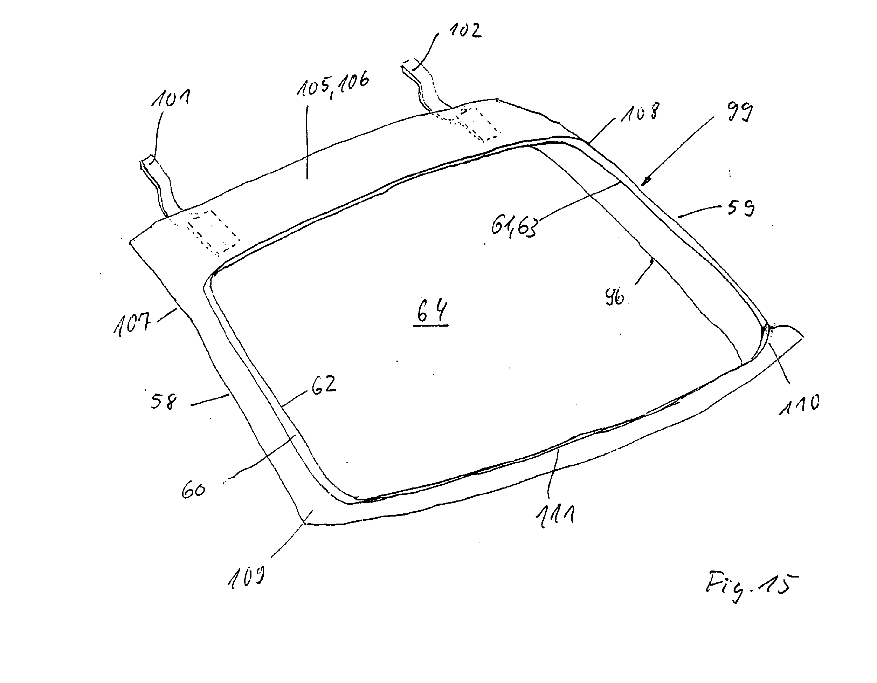

In der Fig. 15 ist eine Ausführungsform dargestellt, in der die Rahmenabschnitte 58, 59 Teile des oberen Heckklappenabschnittes 99 sind. Die oberen Enden 107, 108 der Rahmenabschnitte 58, 59 sind über den oberen Querrahmen 106 miteinander verbunden. Die unteren Enden 109, 110 der Rahmenabschnitte 98, 59 sind an einen unteren Querrahmen 111 befestigt.

An dem oberen Querrahmen 106 sind zwei voneinander beabstandete Scharnierarme 101, 102 angeordnet, die an dem Dachabschnitt 9 der Karosserie 2 gelagert sind.

Der obere Heckklappenabschnitt 99 ist über die Scharnierarme 101, 102 aus der geschlossenen Position 12 in die geöffnete Position 17 und zurück verschwenkbar.

Aus der Fig. 15 ist eine Innenfläche 96 eines Rahmenabschnittes 59 des oberen Heckklappenabschnittes 99 erkennbar, zu der beabstandet eine Oberseite 95 des oberen Tragrahmenabschnittes 56 verläuft. Eine Außenhaut 105 des oberen Heckklappenabschnittes 99 kann ebenso wie die Außenhaut 70 des Heckklappenkörpers 69, 103 aus Blech oder aus Kunststoff gebildet sein.

Der Tragrahmen 51 kann einteilig aus einem Profil gebildet sein. In einer Ausführungsform ist das Profil geschlossen und hat beispielsweise einen rechteckförmigen oder ringförmigen Querschnitt. Der Tragrahmen 51 kann beispielsweise durch ein Innenhochdruck-Umformverfahren (IHU) hergestellt werden.

In einer anderen Ausführungsform kann der Tragrahmen 51 aus mehreren Einzelteilen zu einem Gesamtrahmen miteinander verbunden werden. In einer weiteren Ausführungsform ist der offene Tragrahmen 51 in Blechbauweise hergestellt.

An den oberen, freien Enden 52, 53 ist der Querschnitt oder das Profil so ausgebildet, dass die Scharnierarme 54, 55 befestigt werden können. Beispielsweise können die freien Enden 52, 53 abgeflacht sein, so dass das Profil reduziert ist.

Eine im geschlossenen Zustand 11 der Heckklappe 50, 100 zu einem Fahrzeuginnenraum zeigende Innenfläche der Außenhaut 70 weist in einer Ausführungsform Verstärkungselemente auf, die beispielsweise als Rippen, Stege oder Profile ausgebildet sind.

In einer Ausführungsform sind an der im geschlossenen Zustand 11 der Heckklappe 50, 100 zu einem Fahrzeuginnenraum zeigenden Innenfläche der Außenhaut 70 des Heckklappenkörpers 69, 103 offene Führungsprofile vorgesehen, die durch Innenbleche gebildet sind. Die Querschnitte der Führungsprofile sind so bemessen, dass Bereiche der unteren Tragrahmenabschnitte 66, 67 in den Führungsprofilen geführt und gehaltert sind.

## Patentansprüche

1. Kraftfahrzeug mit einer Karosserie, mit einer in der Karosserie ausgebildeten Heckklappenöffnung, wobei in der Heckklappenöffnung eine Heckklappe verschwenkbar an einem Dachabschnitt der Karosserie angeordnet ist, wobei die Heckklappe einen Heckklappenkörper und einen oberen Heckklappenabschnitt mit einer Heckfensterscheibe aufweist, mit mindestens einer Dichtung, die an der Heckklappenöffnung zur Abdichtung der Heckklappe angeordnet ist, **dadurch gekennzeichnet, dass** einstückig an dem Heckklappenkörper (5) zueinander beabstandete Schwenkarme (16) angeordnet sind, dass an einem oberen Ende (33a, 33b) des jeweiligen Schwenkarmes (16) jeweils ein Scharnierarm (22a, 22b) vorgesehen ist, der jeweils in einem Dachabschnitt (9) der Karosserie (2) gelagert ist, so dass eine Abdichtung zwischen dem oberen Heckklappenabschnitt (6, 64, 99), dem Heckklappenkörper (5, 103) und der Heckklappenöffnung (3) über eine einzige an der Heckklappenöffnung (3) angeordnete, umlaufende Dichtung (15) erfolgt ohne dass eine zusätzliche Abdichtung der jeweiligen Schwenkarme (16) erforderlich ist.

2. Kraftfahrzeug nach Anspruch 1, **dadurch gekennzeichnet, dass** an dem Heckklappenkörper (5) der obere Heckklappenabschnitt (6, 64, 99) befestigt ist oder dass der obere Heckklappenabschnitt (6, 64, 99) verschwenkbar zu dem Heckklappenkörper (5) angeordnet ist.

3. Kraftfahrzeug nach Anspruch 2, **dadurch gekennzeichnet, dass** der obere Heckklappenabschnitt (6, 64, 99) über voneinander beabstandete Scharnierarme (18a, 18b) verschwenkbar in einem Dachabschnitt (9) der Karosserie (2) gelagert ist.

4. Kraftfahrzeug nach einem der vorhergehenden Ansprüche, **dadurch gekennzeichnet, dass** an der umlaufenden Dichtung (15) der obere Randabschnitt (20) der Heckfensterscheibe (6) und seitliche Randabschnitte (34a, 34b) der Heckfensterscheibe (6) im geschlossenen Zustand (12) der Heckklappe (4) anliegen.

5. Kraftfahrzeug nach einem der vorhergehenden Ansprüche, **dadurch gekennzeichnet, dass** an einem unteren Bereich (36) der umlaufenden Dichtung (15) seitliche Randabschnitte (37a, 37b) und ein unterer, in Fahrzeugquerrichtung y, in etwa horizontal verlaufender Randabschnitt (38) des Heckklappenkörpers (5) anliegen.

6. Kraftfahrzeug nach einem der vorhergehenden Ansprüche, **dadurch gekennzeichnet, dass** an einem oberen Randabschnitt (24) des Heckklappenkörpers (5) eine in Fahrzeugquerrichtung y, in etwa horizontal verlaufende Dichtung (23) angeordnet ist, die zur Abdichtung eines unteren Randabschnittes (25) der Heckfensterscheibe (6) dient.

7. Kraftfahrzeug nach einem der vorhergehenden Ansprüche,
**dadurch gekennzeichnet, dass** die zueinander beabstandeten Schwenkarme (16) obere Tragrahmenabschnitte (56, 57) eines offenen Tragrahmens (51) sind.

8. Kraftfahrzeug nach Anspruch 7,
**dadurch gekennzeichnet, dass** sich an die oberen Tragrahmenabschnitte (56, 57) untere Tragrahmenabschnitte (66, 67) anschließen und dass die unteren Tragrahmenabschnitte (66, 67) schräg aufeinander zulaufen und miteinander verbunden sind.

9. Kraftfahrzeug nach Anspruch 8,
**dadurch gekennzeichnet, dass** der offene Tragrahmen (51) einteilig oder mehrteilig hergestellt ist.

10. Kraftfahrzeug nach einem der vorhergehenden Ansprüche,
**dadurch gekennzeichnet, dass** der offene Tragrahmen (51) durch ein Innenhochdruck-Umformverfahren hergestellt ist oder das Teile des offenen Tragrahmens (51) durch ein Innenhochdruck-Umformverfahren hergestellt sind.

11. Kraftfahrzeug nach einem der vorhergehenden Ansprüche,
**dadurch gekennzeichnet, dass** der offene Tragrahmen (51) in Blechbauweise hergestellt ist

12. Kraftfahrzeug nach einem der vorhergehenden Ansprüche,
**dadurch gekennzeichnet, dass** in einem Übergangsbereich (86, 87), in dem ein unteres Ende (84, 85) des oberen Tragrahmenabschnittes (56, 57) mit einem oberen Ende (88, 89) des unteren Tragrahmenabschnittes (66, 67) verbunden ist, ein Quertragrahmen (98) angeordnet ist.

13. Kraftfahrzeug nach einem der vorhergehenden Ansprüche,
**dadurch gekennzeichnet, dass** der Quertragrahmen (98) unterhalb eines unteren Randes (65) einer Heckfensterscheibe (64) und in einem oberen Bereich (77) des Heckklappenkörpers (69, 103) angeordnet ist.

14. Kraftfahrzeug nach einem der vorhergehenden Ansprüche,
**dadurch gekennzeichnet, dass** der Quertragrahmen (98) mit den seitlichen, unteren Tragrahmenabschnitten (66, 67) des offenen Tragrahmens (51) einen geschlossenen Rahmen bildet, der die Form eines Dreieckes hat.

15. Kraftfahrzeug nach einem der vorhergehenden Ansprüche,
**dadurch gekennzeichnet, dass** der Übergangsbereich (86, 87) des Tragrahmens (51) jeweils eine Verkeilungseinrichtung (78, 79) aufweist, die nach außen absteht oder dass an einem Seitenrand (51, 52) des Heckklappenkörpers (69, 103) jeweils eine Verkeilungseinrichtung (78, 79) ausgebildet ist.

16. Kraftfahrzeug nach Anspruch 15,
**dadurch gekennzeichnet, dass** die jeweilige Verkeilungseinrichtung (78, 79) im geschlossenen Zustand (11) der Heckklappe (50, 100) in Eingriff mit einer Aufnahmeeinrichtung für die jeweilige Verkeilungseinrichtung (78, 79) kommt, die an der jeweiligen, gegenüberliegenden Karosseriesäule (7) ausgebildet ist.

17. Kraftfahrzeug nach einem der vorhergehenden Ansprüche,
**dadurch gekennzeichnet, dass** der Heckklappenkörper (69, 103) eine Innenhaut aufweist, die mit der Außenhaut (70) den Heckklappenkörper (69, 103) bildet.

18. Kraftfahrzeug nach Anspruch 17,
**dadurch gekennzeichnet, dass** an der Außenhaut (70) und/oder an der Innenhaut Mittel vorgesehen sind, die die unteren Tragrahmenabschnitte (66, 67) haltern.

19. Kraftfahrzeug nach Anspruch 18,
**dadurch gekennzeichnet, dass** das Mittel ein Führungsprofil aufweist, in dem der jeweilige untere Tragrahmenabschnitt (66, 67) angeordnet ist.

20. Kraftfahrzeug nach einem der vorhergehenden Ansprüche,
**dadurch gekennzeichnet, dass** der Verbindungsbereich (92) der unteren Tragrahmenabschnitte (66, 67) an einem unteren Rand (93) des Heckklappenkörpers (69, 103) angeordnet ist

21. Kraftfahrzeug nach einem der vorhergehenden Ansprüche,
**dadurch gekennzeichnet, dass** sich eine Schlossaufnahme (68) an dem unteren Bereich (92) abstützt oder mit dem unteren Bereich (92) verbunden ist oder dass die Schlossaufnahme (68) mit der Außenhaut (70) und/oder der Innenhaut des Heckklappenkörpers (69, 103) verbunden ist, so dass eine Krafteinleitung über die Schlossaufnahme (68) in den unteren Tragrahmenabschnitt (66, 67) möglich ist.

22. Kraftfahrzeug nach einem der vorhergehenden Ansprüche,
**dadurch gekennzeichnet, dass** im geschlossenen Zustand (11) der Heckklappe (50, 100) eine Aussteifung der Karosserieöffnung (3) durch die formschlüssige Verbindung der Verkeilungseinrichtungen (78, 79) und der Schlossaufnahme (68) erfolgt.

23. Kraftfahrzeug nach einem der vorhergehenden Ansprüche,
**dadurch gekennzeichnet, dass** der obere Heckklappenabschnitt (99) eine Heckfensterscheibe (64) aufweist, die von einem Rahmen umgeben ist, oder dass der obere Heckklappenabschnittes (99) eine rahmenlose Heckfensterscheibe (64) ist,

24. Kraftfahrzeug nach Anspruch 23,
**dadurch gekennzeichnet, dass** obere Enden (107, 108) von seitlichen Rahmenabschnitten (58, 59) des oberen Heckklappenabschnittes (99) über einen oberen Querrahmen (106) miteinander verbunden sind und dass untere Enden (109, 110) der Rahmenabschnitte (98, 59) über einen unteren Querrahmen (111) miteinander verbunden sind.

25. Kraftfahrzeug nach Anspruch 24,
**dadurch gekennzeichnet, dass** an dem oberen Querrahmen (106) zwei voneinander beabstandete Scharnierarme (101, 102) befestigt sind, die an dem Dachabschnitt (9) der Karosserie (2) gelagert sind.

26. Kraftfahrzeug nach Anspruch 25, **dadurch gekennzeichnet, dass** der obere Heckklappenabschnitt (99) über die Scharnierarme (101, 102) aus der geschlossenen Position (12) in die geöffnete Position (17) und zurück verschwenkbar ist.

27. Kraftfahrzeug nach einem der vorhergehenden Ansprüche,
**dadurch gekennzeichnet, dass** obere Tragrahmenabschnitte (56, 57) des Tragrahmens (51) benachbart zu einer Innenfläche (96) von seitlichen Rändern (58", 59"; 58, 59) des oberen Heckklappenabschnittes (99) verlaufen.

28. Kraftfahrzeug nach einem der Ansprüche 1 bis 26,
**dadurch gekennzeichnet, dass** die oberen Tragrahmenabschnitte (56, 57) des Tragrahmens (51) an einer Innenfläche (96) der seitlichen Rändern (58", 59"; 58, 59) des oberen Heckklappenabschnittes (99) über einen Klebstoff (94) befestigt sind.

## Claims

1. A motor vehicle with a body, with a tailgate opening formed in the body, wherein, in the tailgate opening, a tailgate is pivotably arranged on a roof section of the body, wherein the tailgate has a tailgate body and an upper tailgate section with a rear window pane, with at least one seal, which is arranged on the tailgate opening to seal the tailgate, **characterised in that** pivot arms (16), which are spaced apart from one another, are arranged in one piece on the tailgate body (5), **in that** a hinge arm (22a, 22b) is provided in each case on an upper end (33a, 33b) of the respective pivot arm (16) and is mounted, in each case, in a roof section (9) of the body (2), so that a seal is effected between the upper tailgate section (6, 64, 99), the tailgate body (5, 103) and the tailgate opening (3) by means of a single peripheral seal (15) arranged on the tailgate opening (3) without an additional seal of the respective pivot arms (16) being necessary.

2. A motor vehicle according to claim 1, **characterised in that** the upper tailgate section (6, 64, 99) is fastened to the tailgate body (5) or **in that** the upper tailgate section (6, 64, 99) is pivotably arranged with respect to the tailgate body (5).

3. A motor vehicle according to claim 2, **characterised in that** the upper tailgate section (6, 64, 99) is pivotably mounted by means of hinge arms (18a, 18b), which are spaced apart from one another, in a roof section (9) of the body 12).

4. A motor vehicle according to any one of the preceding claims,
**characterised in that** the upper edge section (20) of the rear window pane (6) and side edge sections (34a, 34b) of the rear window pane (6) rest on the peripheral seal (15) when the tailgate (4) is in the closed state (12).

5. A motor vehicle according to any one of the preceding claims,
**characterised in that** lateral edge sections (37a, 37b) and a lower edge section (38) of the tailgate body (5) running approximately horizontally in the transverse direction y of the vehicle, rest on a lower region (36) of the peripheral seal (15).

6. A motor vehicle according to any one of the preceding claims,
**characterised in that** a seal (23) running approximately horizontally in the transverse direction y of the vehicle, which seal is used to seal a lower edge section (25) of the rear window pane (6), is arranged on an upper edge section (24) of the tailgate body (5).

7. A motor vehicle according to any one of the preceding claims,
**characterised in that** the pivot arms (16), which are spaced apart from one another, are upper support frame sections (56, 57) of an open support frame (51).

8. A motor vehicle according to claim 7,
**characterised in that** lower support frame sections (66, 67) adjoin the upper support frame sections (56, 57) and **in that** the lower support frame sections (66, 67) taper obliquely toward one another and are connected to one another.

9. A motor vehicle according to claim 8,
**characterised in that** the open support frame (51) is produced in one part or in multiple parts.

10. A motor vehicle according to any one of the preceding claims,
**characterised in that** the open support frame (51) is produced by an internal high-pressure forming method or parts of the open support frame (51) are produced by an internal high-pressure forming method.

11. A motor vehicle according to any one of the preceding claims,
**characterised in that** the open support frame (51) is produced by a sheet metal mode of construction.

12. A motor vehicle according to any one of the preceding claims,
**characterised in that** a transverse support frame (98) is arranged in a transition region (86, 87), in which a lower end (84, 85) of the upper support frame section (56, 57) is connected to an upper end (88, 89) of the lower support frame section (66, 67).

13. A motor vehicle according to any one of the preceding claims,
**characterised in that** the transverse support frame (98) is arranged below a lower edge (65) of a rear window pane (64) and in an upper region (77) of the tailgate body (69, 103).

14. A motor vehicle according to any one of the preceding claims,
**characterised in that** the transverse support frame (98), with the lateral, lower support frame sections (66, 67) of the open support frame (51), forms a closed frame, which has the form of a triangle.

15. A motor vehicle according to any one of the preceding claims,
**characterised in that** the transition region (86, 87) of the support frame (51) in each case has a wedging device (78, 79), which projects outwardly or **in that** a wedging device (78, 79) is configured in each case on a side edge (51, 52) of the tailgate body (69, 103).

16. A motor vehicle according to claim 15,
**characterised in that** when the tailgate (50, 100) is in the closed state (11), the respective wedging device (78, 79) engages with a receiving device for the respective wedging device (78, 79), which is configured on the respective, opposing body pillar (7).

17. A motor vehicle according to any one of the preceding claims,
**characterised in that** the tailgate body (69, 103) has an inner skin, which, with the outer skin (70), forms the tailgate body (69, 103).

18. A motor vehicle according to claim 1 7,
**characterised in that** means, which hold the lower support frame sections (66, 67), are provided on the outer skin (70) and/or on the inner skin.

19. A motor vehicle according to claim 18,
**characterised in that** the means has a guide profile, in which the respective lower support frame section (66, 67) is arranged.

20. A motor vehicle according to any one of the preceding claims,
**characterised in that** the connecting region (92) of the lower support frame sections (66, 67) is arranged on a lower edge (93) of the tailgate body (69, 103).

21. A motor vehicle according to any one of the preceding claims,
**characterised in that** a latch (68) is supported on the lower region (92) or is connected to the lower region (92) or **in that** the latch (68) is connected to the outer skin (70) and/or the inner skin of the tailgate body (69, 103), so that an introduction of force is possible by means of the latch (68) into the lower support frame section (66, 67).

22. A motor vehicle according to any one of the preceding claims,
**characterised in that** when the tailgate (50, 100) is in the closed state (11), a reinforcement of the body opening (3) takes place by means of the positive connection of the wedging devices (78, 79) and the latch (68).

23. A motor vehicle according to any one of the preceding claims,
**characterised in that** the upper tailgate section (99) has a rear window pane (64), which is surrounded by a frame, or **in that** the upper tailgate section (99) is a frameless rear window pane (64).

24. A motor vehicle according to claim 23,
**characterised in that** upper ends (107, 108) of lateral frame sections (58, 59) of the upper tailgate section (99) are connected to one another by means of an upper transverse frame (106) and **in that** lower ends (109, 110) of the frame sections (98, 59) are connected to one another by means of a lower transverse frame (111).

25. A motor vehicle according to claim 24,
**characterised in that** two hinge arms (101, 102), which are spaced apart from one another and are mounted on the roof section (9) of the body (2), are fastened to the upper transverse frame (106).

26. A motor vehicle according to claim 25, **characterised in that** the upper tailgate section (99) can be pivoted by the hinge arms (101, 102) from the closed position (12) into the opened position (17) and back.

27. A motor vehicle according to any one of the preceding claims,
**characterised in that** upper support frame sections (56, 57) of the support frame (51) run adjacent to an inner face (96) of lateral edges (58", 59"; 58, 59) of the upper tailgate section (99).

28. A motor vehicle according to any one of claims 1 to 26,
**characterised in that** the upper support frame sections (56, 57) of the support frame (51) are fastened to an inner face (96) of the lateral edges (58", 59"; 58, 59) of the upper tailgate section (99) by means of an adhesive (94).

## Revendications

1. Véhicule automobile ayant une carrosserie, une ouverture de hayon réalisée dans la carrosserie,
* l'ouverture recevant un hayon relié de manière pivotante à un segment du toit de la carrosserie,
* le hayon ayant un corps et un segment supérieur muni d'une lunette arrière,
* au moins un joint installé sur l'ouverture du hayon pour assurer l'étanchéité du hayon,
véhicule **caractérisé en ce que**
- le corps (5) du hayon comporte des bras pivotants (16) écartés l'un de l'autre et réalisés en une seule pièce avec le corps,
- l'extrémité supérieure (33a, 33b) de chaque bras pivotant (16) comporte un bras de charnière (22a, 22b) monté respectivement dans un segment de toit (9) de la carrosserie (2) pour que l'étanchéité entre le segment supérieur (6, 64, 99) du hayon, le corps (5, 103) du hayon et l'ouverture de hayon (3) soit faite par un unique joint (15) périphérique installé dans l'ouverture de hayon (3) sans nécessiter de joint supplémentaire pour les bras pivotants (16) respectifs.

2. Véhicule automobile selon la revendication 1,
**caractérisé en ce que**
- le segment supérieur (6, 64, 99) du hayon est fixé au corps (5) du hayon, ou
- le segment supérieur (6, 64, 99) du hayon est installé de manière pivotante sur le corps (5) du hayon.

3. Véhicule automobile selon la revendication 2,
**caractérisé en ce que**
le segment supérieur (6, 64, 99) du hayon est monté par des bras de charnière (18a, 18b) écartés l'un de l'autre de manière pivotante sur un segment de toit (9) de la carrosserie (2).

4. Véhicule automobile selon l'une des revendications précédentes,
**caractérisé en ce que**
le segment de bord supérieur (20) de la lunette arrière (6) et les segments de bord latéraux (34a, 34b) de la lunette arrière (6) s'appliquent, en position fermée (12) du hayon (4), contre le joint périphérique (15).

5. Véhicule automobile selon l'une des revendications précédentes,
**caractérisé en ce que**
des segments de bord latéraux (37a, 37b) et un segment de bord (38), inférieur du corps de hayon (5), dirigé sensiblement horizontalement dans la direction transversale (y) du véhicule, s'appliquent contre la zone inférieure (36) du joint périphérique (15).

6. Véhicule automobile selon l'une des revendications précédentes,
**caractérisé en ce que**
le segment de bord supérieur (24) du corps (5) du hayon comporte un joint (23) dirigé sensiblement horizontalement dans la direction transversale (y) du véhicule, ce joint servant à réaliser l'étanchéité du segment de bord inférieur (25) de la lunette arrière (6).

7. Véhicule automobile selon l'une des revendications précédentes,
**caractérisé en ce que**
les bras pivotants (16) écartés l'un de l'autre, sont les segments supérieurs (56, 57) d'un châssis de support (51), ouvert.

8. Véhicule automobile selon la revendication 7,
**caractérisé en ce que**
- les segments supérieurs (56, 57) du châssis se poursuivent par des segments (66, 67) inférieurs du châssis, et
- les segments inférieurs (66, 67) se rapprochent en biais et son reliés l'un à l'autre.

9. Véhicule automobile selon la revendication 8,
**caractérisé en ce que**
le châssis de support (51), ouvert, est réalisé en une seule pièce ou en plusieurs pièces.

10. Véhicule automobile selon l'une des revendications précédentes,
**caractérisé en ce que**
le châssis de support (51), ouvert, est réalisé par un procédé de formage à haute pression intérieure ou des parties du châssis de support (51), ouvert, sont réalisées par un procédé de formage à haute pression, intérieure.

11. Véhicule automobile selon l'une des revendications précédentes,
**caractérisé en ce que**
le châssis de support (51), ouvert, est fabriqué en tôle.

12. Véhicule automobile selon l'une des revendications précédentes,
**caractérisé par**
une traverse de châssis (98) dans la zone transitoire (86, 87) dans laquelle l'extrémité inférieure (84, 85) du segment supérieur de châssis (56, 57) est reliée à l'extrémité supérieure (88, 89) du segment inférieur de châssis (66, 67).

13. Véhicule automobile selon l'une des revendications précédentes,
**caractérisé en ce que**
la traverse (98) se trouve en dessous du bord inférieur (65) d'une lunette arrière (64) et dans la zone supérieure (77) du corps de hayon (69, 103).

14. Véhicule automobile selon l'une des revendications précédentes,
**caractérisé en ce que**
la traverse de châssis (98) forme un cadre fermé triangulaire avec les segments inférieurs (66, 67) du châssis de support ouvert (51).

15. Véhicule automobile selon l'une des revendications précédentes,
**caractérisé en ce que**
la zone transitoire (86, 87) du châssis de support (51) comporte une installation de calage (78, 79) en saillie vers l'extérieur ou chaque bord latéral (51, 52) du corps de hayon (69, 103) est réalisé avec une installation de calage (78, 79).

16. Véhicule automobile selon la revendication 15,
**caractérisé en ce que**
l'installation de calage (78, 79), respective, en position fermée (11) du hayon (50, 100), vient en prise dans une installation de réception pour l'installation de calage (78, 79), respective, réalisée sur la colonne de carrosserie (7) respectivement en regard.

17. Véhicule automobile selon l'une des revendications précédentes,
**caractérisé en ce que**
le corps de hayon (69, 103) a une peau intérieure formant le corps de hayon (69, 103) avec la peau extérieure (70).

18. Véhicule automobile selon la revendication 17,
**caractérisé en ce que**
la peau extérieure (70) et/ou la peau intérieure, comportent des moyens fixant les segments inférieurs (66, 67) du châssis de support.

19. Véhicule automobile selon la revendication 18,
**caractérisé en ce que**
le moyen comporte un profil de guidage recevant le segment inférieur respectif (66, 67) du châssis de support.

20. Véhicule automobile selon l'une des revendications précédentes,
**caractérisé en ce que**
la zone de liaison (92) des segments inférieurs (66, 67) du châssis de support, est prévue au niveau du bord inférieur (93) du corps de hayon (69, 103).

21. Véhicule automobile selon l'une des revendications précédentes,
**caractérisé par**
une prise de serrure (68) s'appuie sur la zone inférieure (92) ou est reliée à la zone inférieure (92), ou
la prise de serrure (68) est reliée à la peau extérieures (70) et/ou à la peau intérieure du corps de hayon (69, 103) pour transférer les efforts par la prise de serrure (68) aux segments inférieurs (66, 67) du châssis de support.

22. Véhicule automobile selon l'une des revendications précédentes,
caractérisé en qu'
en position fermée (11) du hayon (50, 100), l'ouverture de carrosserie (3) est rigidifiée par la liaison par la forme des installations de calage (78, 79) et de la prise de serrure (68).

23. Véhicule automobile selon l'une des revendications précédentes,
**caractérisé en ce que**
- le segment supérieur (99) du hayon comporte une lunette arrière (64) entourée par un cadre, ou
- le segment supérieur (99) du hayon est une lunette arrière (64) sans cadre.

24. Véhicule automobile selon la revendication 23,
**caractérisé en ce que**
- les extrémités supérieures (107, 108) des segments latéraux (58, 59) du cadre du segment supérieur (99) du hayon, sont reliées par une traverse supérieure (106), et
- les extrémités inférieures (109, 110) des segments de châssis (98, 59), sont reliées par une traverse inférieure (111).

25. Véhicule automobile selon la revendication 24,
**caractérisé par**
deux bras de charnière (101, 102) écartés l'un de l'autre, fixés à la traverse supérieure (106) et qui sont montés sur le segment de toit (9) de la carrosserie (2).

26. Véhicule automobile selon la revendication 25,
**caractérisé en ce que**
le segment supérieur (99) du hayon pivote par des bras de charnière (101, 102) de la position fermée (12) à la position ouverte (17) et inversement.

27. Véhicule automobile selon l'une des revendications précédentes,
**caractérisé en ce que**
les segments supérieurs (56, 57) du châssis de support (51) passent au voisinage de la surface intérieure (96) des bords latéraux (58", 59", 58, 59) du segment supérieur (99) du hayon.

28. Véhicule automobile selon l'une des revendications 1 à 26,
**caractérisé en ce que**
les segments supérieurs (56, 57) du châssis de support (51) sont fixés avec de la colle (94) à la surface intérieure (96) des bords latéraux (58", 59", 58, 59) du segment supérieur (99) du hayon.
